# EUROPEAN PATENT APPLICATION

(11) **EP 4 782 275 A1**
(43) Date of publication of application: **29.07.2026**
(21) Application number: 24882359.3
(22) Date of filing: 21.10.2024
(51) Int. Cl.: B60N 3/02, B60R 1/26

(54) **GET-ON/OFF GRIP APPARATUS**

(30) Priority: 27.10.2023 JP 2023184626
(71) Applicant: Mitsubishi Fuso Truck and Bus Corporation, Nakahara-ku, Kawasaki-shi Kanagawa 2118522 (JP)
(72) Inventor: TAKAHASHI, Hisashi, Kawasaki-shi, Kanagawa 211-8522 (JP); SAKAI, Naoto, Kawasaki-shi, Kanagawa 211-8522 (JP); PATANKAR, Yashavardhan, Kawasaki-shi, Kanagawa 211-8522 (JP); IWAHORI, Toshihiro, Kawasaki-shi, Kanagawa 211-8522 (JP); SANTOS, Diego, Kawasaki-shi, Kanagawa 211-8522 (JP)
(74) Representative: Hofstetter, Schurack & Partner
(86) International application number: PCT/JP2024/037464
(87) International publication number: WO 2025/089246

(57) **Abstract**

An enter/exit-assist grip device (10) according to the present application assists an entering/exiting operation of a passenger of a vehicle when the passenger enters and exits the vehicle through an opening (7A) for entering and exiting the vehicle including comprising an electronic photographing device (9) capable of photographing an inside or an outside of the vehicle and a monitor device having an image displaying region that displays image information photographed by the electronic photographing device (9) to the passenger. The enter/exit-assist grip device (10) includes: a fixing (11) unit that is fixed to a front pillar (3R); a grip unit (12) that extends from the fixing unit (11) to a rear side where the opening (7A) is positioned, the passenger gripping the grip unit (12) for the entering/exiting operation; and a frame unit (13) that holds the monitor device (14) in a planar region (13C) surrounded by vertical frames (13A) and horizontal frames (13B), the vertical frames (13A) being arranged inward of the vehicle from the fixing unit (11) and extending along the vehicle height direction, the horizontal frames (13B) extending from the fixing unit (11) inward of the vehicle along a vehicle width direction.

## Description

### [Technical Field]

The present disclosure relates to an enter/exit-assist grip device with a monitor device which enter/exit-assist grip device assists a passenger to enter and exit a vehicle.

### [Background Art]

Advance of vehicle technology accompanies a spread of technique that recognizes the presence of an object inside or outside a vehicle, such as a van, a truck, and a bus, with a camera or a radar, for example, and causes a device installed in the vehicle to function on the basis of the recognized information.

For example, PTL 1 describes an electronic side mirror device that is a side mirror using a digital camera. The electronic side mirror device includes a door camera that photographs the side of the vehicle at the outer side of the front end of the front door of the vehicle. This electronic side mirror device projects an image photographed by the door camera onto a holographic optical device arranged on a windshield or a side window by a projector device.

### [Citation List]

### [Patent Literature]

[PTL 1]
JP2011-213186 A

### [Summary of Invention]

### [Technical Problem]

In the technique disclosed in PTL 1, in order to monitor (confirm) the image photographed by the door camera, the projector device needs to be installed in the interior space (vehicle interior or cab room) inside the vehicle. In addition, a technique has conventionally been known which confirms an image of the periphery of the vehicle photographed by an on-board camera with reference to a display device arranged in the cab room.

Unfortunately, since the space in the cab room is narrow, the arrangement position of the monitor device for image confirmation such as a projector device or a display device has a low degree of freedom.

Incidentally, in a vehicle, such as a truck and a minivan, that is not provided with a hood in front of the cab and arranges the engine room under the front seat, the height of the front seat from the ground level is often high. Therefore, in order to assist an entering/exiting operation of a passenger, a grip that assists the entering/exiting operation is sometimes provided inside the cab room. In entering or exiting from the cab room, the passenger can hold grip (grip unit) to support his/her body.

As the above, in installing an electronic side mirror device into a vehicle provided with a grip in the cab room, the restriction to the arrangement position of a monitor device in the cab room comes to be severer than in a vehicle not provided with a grip.

As described above, since the layout between a grip and a monitor device has not been considered, there is a room for development in optimizing the arrangement between the grip and the monitor device.

The present disclosure has been devised in view of such a problem and one of objects thereof is to be able to provide an enter/exit-assist grip device with a monitor device which enter/exit-assist grip device can optimize the arrangement of a grip (grip unit) that assists an entering/exiting operation and a monitor device.

### [Solution to Problem]

The present disclosure solves at least a part of the above problem can be embodied in the following aspects or applications.

(1) An enter/exit-assist grip device according to the present application assists an entering/exiting operation of a passenger of a vehicle when the passenger enters and exits the vehicle through an opening for entering and exiting the vehicle including an electronic photographing device capable of photographing an inside or an outside of the vehicle and a monitor device having an image displaying region that displays image information photographed by the electronic photographing device to the passenger. The enter/exit-assist grip device includes: a fixing unit that is fixed to a front pillar, the front pillar being arranged adjacent to a front side of the opening in the vehicle and extending in a vehicle height direction; a grip unit that extends from the fixing unit to a rear side where the opening is positioned, the passenger gripping the grip unit for the entering/exiting operation; and a frame unit that holds the monitor device in a planar region surrounded by vertical frames and horizontal frames, the vertical frames being arranged inward of the vehicle on an opposite side of the grip unit with respect to the fixing unit and extending along the vehicle height direction, the horizontal frames extending from the fixing unit inward of the vehicle along a vehicle width direction.

In the enter/exit-assist grip device according to this application example, the grip unit and the frame unit that holds the monitor device are both integrally extended from the fixing unit fixed to the front pillar. With this configuration, the grip unit and the monitor device can be collectively and efficiently arranged around the front pillar. Therefore, it is possible to optimize the arrangement of the grip unit that assists an entering/exiting operation of a passenger and the monitor device. As a consequence, a narrow interior space inside the vehicle can be effectively utilized.

(2) The enter/exit-assist grip device according to the present application may further include a controller that executes, based on entering information indicating that the passenger enters the vehicle, a light-emitting mode that causes the monitor device to emit light in a predetermined manner.

By causing the monitor device to emit light, the grip unit is irradiated with the light that the monitor device emits. Therefore, the recognizability of the grip unit is enhanced in a situation where visibility is poor, for example, at night or in a dark place. This can appropriately support the entering/exiting operation of a passenger in entering or exiting the vehicle.

(3) In the enter/exit-assist grip device according to the present application, the grip unit may be arranged within a range of a beam angle of the monitor device being held by the frame unit.

With this structure, when the monitor device is caused to emit light in the light emitting mode, the grip unit can be reliably irradiated with light, which can further enhance recognizability of the grip unit.

(4) In the enter/exit-assist grip device according to the present application, the grip unit may include a face arranged opposite to the frame unit, the face serving as a chamfered portion being chamfered flat.

With this structure, when the monitor device is caused to emit light in the light emitting mode, the chamfered portion of the grip unit is irradiated with emitted light. This widens a face likely to be irradiated with light and further enhances the recognizability of the grip unit.

(5) In the enter/exit-assist grip device according to the present application, the controller may cause a part of the image displaying region of the monitor device to emit light in the light emitting mode, the part being positioned at a side of the grip unit.

With this structure, a part region adjacent to the grip unit emits light in the light emitting mode, so that the recognizability of the grip unit can be further enhanced in comparison with an environment having poor brightness.

(6) In the enter/exit-assist grip device according to the present application, the controller may emit a motion light-emitting pattern having a predetermined pattern in the light-emitting mode.

With this structure, light irradiating the grip unit is a motion light emitting pattern in a predetermined pattern, so that the three-dimensional shape of the grip unit can be easily recognized. Therefore, the recognizability of the grip unit is further enhanced.

(7) In the enter/exit-assist grip device according to the present application, the entering information may be an unlocking signal that instructs to unlock a door that closes the opening.

With this structure, the light-emitting pattern is executed in response to the unlocking instruction of the door. Therefore, the light-emitting mode can be started at an appropriate timing just before the passenger gets into (enters) the vehicle.

(8) In the enter/exit-assist grip device according to the present application, the frame unit may be arranged at a position at least partly overlaps the front pillar as viewed from a driver's seat in the vehicle

With this structure, since the monitor device at least partly overlaps the front pillar as viewed from the driver's seat, the field of view of the driver is less likely to be disturbed by the windshield and the door glass. In addition, since the monitor device can be checked in the same way as when looking at door mirror, the driver can easily check the monitor devices while driving the vehicle.

### [Advantageous Effects of Invention]

According to the enter/exit-assist grip device with a monitor device of the present embodiment, the arrangement of a grip (grip unit) that assists an entering/exiting operation and a monitor device can be optimized.

### [Brief Description of Drawings]

[FIG. 1]

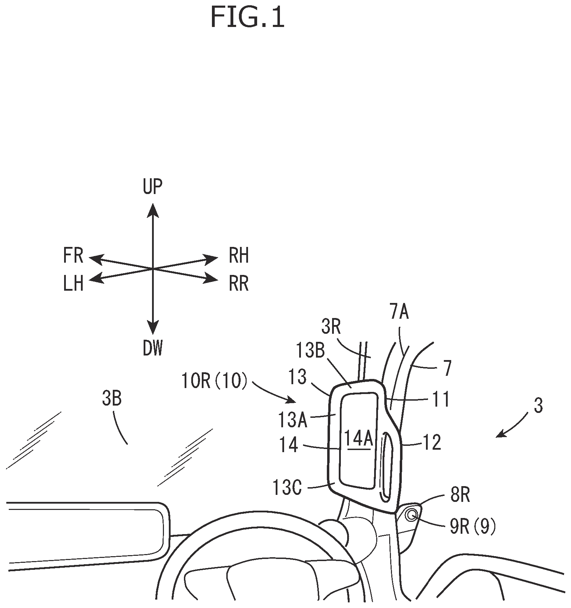

   FIG. 1 is a perspective view showing a main part of the inside of a cab room of a truck adopting an enter/exit-assist grip device with a monitor device according to an application.
[FIG. 2]

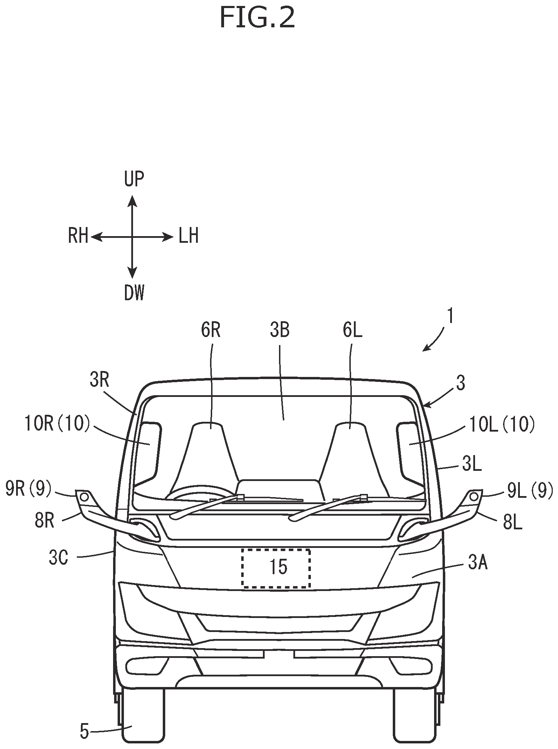

   FIG. 2 is a front view of the truck of FIG. 1 seen from the front.
[FIG. 3]

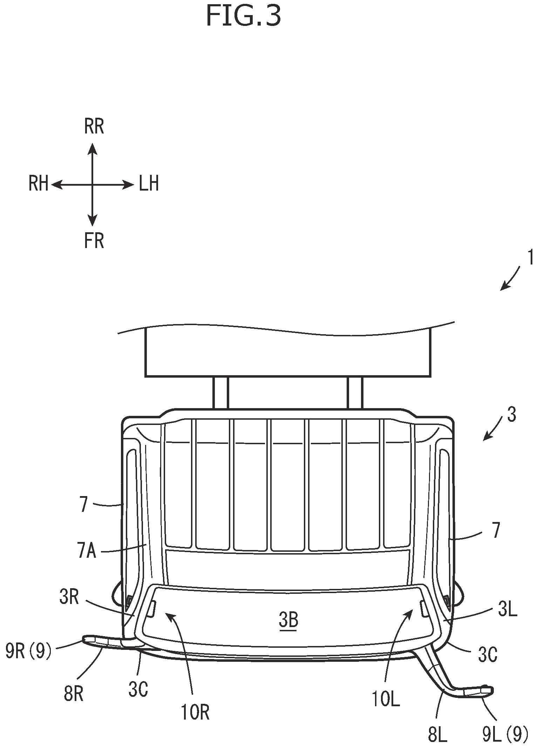

   FIG. 3 is a plan view of the truck of FIG. 1 seen from above.
[FIG. 4]

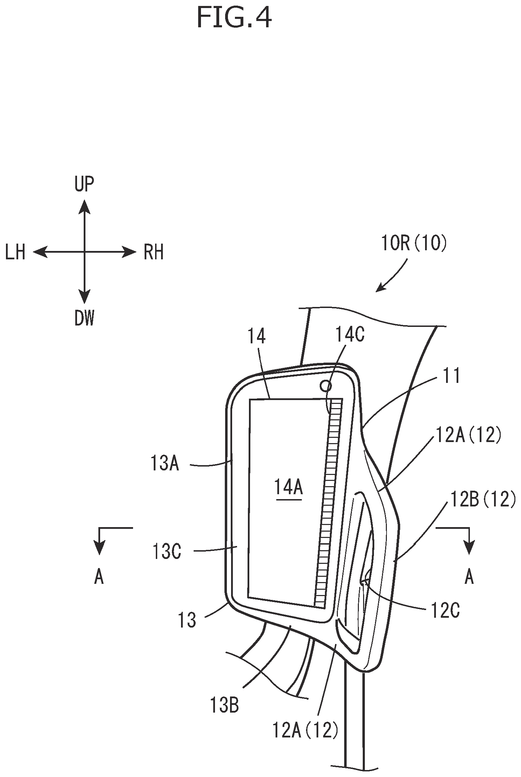

   FIG. 4 is an enlarged view of the enter/exit-assist grip device of FIG. 1.
[FIG. 5]

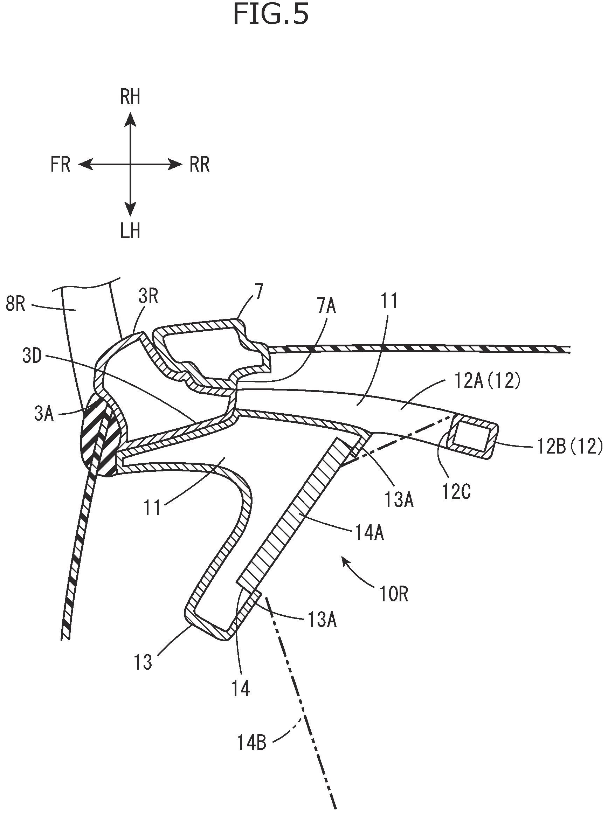

   FIG. 5 is a cross sectional view of the enter/exit-assist grip device of FIG. 4 cut along Line A-A.
[FIG. 6]

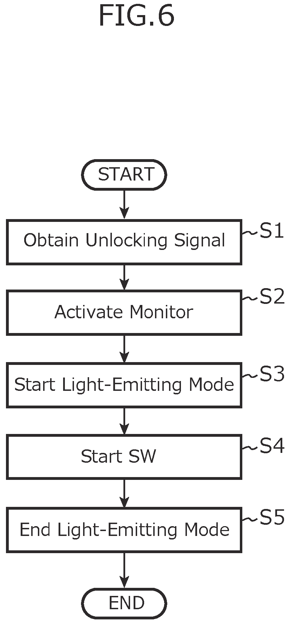

   FIG. 6 is a flow chart illustrating control related to a light-emitting mode.
[FIG. 7]

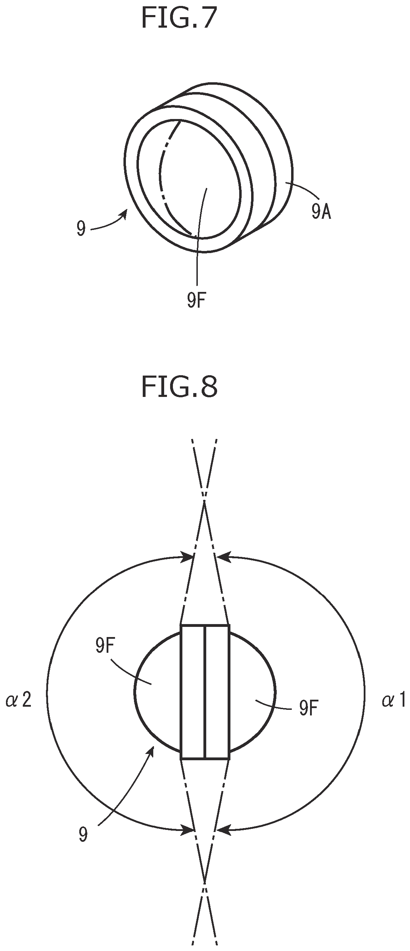

   FIG. 7 is a perspective view of a 360-degree camera used as a camera.
[FIG. 8]
   FIG. 8 is a diagram showing a photographing region of the 360-degree camera of FIG. 7.

### [Description of Embodiments]

With reference to the drawings, an embodiment of the present disclosure will now be described. The following embodiment is merely illustrative and are not intended to exclude the application of various modifications and techniques not explicitly described in the following embodiment. Each configuration of the embodiment can be variously modified and implemented without departing from the gist thereof. Also, each configuration can be selected or omitted according to the requirement, or can be combined appropriately.

Hereinafter, the front-rear direction of a vehicle adopting an enter/exit-assist grip device with a monitor device (hereinafter, also referred to as a simply "enter/exit-assist grip device") according to the present embodiment is also referred to as the vehicle length direction, and the left-right direction of the vehicle is also referred to as the vehicle width direction. A vertical direction orthogonal to both the front-rear direction and the left-right direction is also referred to as a vehicle height direction. The left-right direction is determined on the basis of the posture facing the front of the vehicle. In the drawings, the front is indicated by "FR", the rear is indicated by "RR", the left is indicated by "LH", the right is indicated by "RH", the upward is indicated by "UP", and the downward is indicated by "DW". In addition, the interior space (cab room) side of the vehicle is referred to as "inside" or "inward", and the opposite side to the inside is referred to as "outside" or "outward" of the vehicle.

### 1. Configuration

FIG. 1 is a diagram showing a truck 1 (vehicle) provided with an enter/exit-assist grip device 10 with a monitor device according to the present embodiment, and is a perspective view of the inside of the cab room of the truck 1 viewed forward from the rear in lower right direction. FIG. 2 is a front view of the truck 1 of FIG. 1 seen from the front. FIG. 3 is a plan view of the truck 1 of FIG. 1 as viewed from above.

First, description will now be made in relation to the truck 1 provided with the enter/exit-assist grip device 10.

As shown in FIGs. 1-3, the truck 1 is an example of the vehicle provided with the enter/exit-assist grip device 10, and is a vehicle not having a hood in front of a cab 3, i.e., a so-called cab-over vehicle.

The truck 1 includes the cab 3 provided on a front portion of a frame (not shown) forming a skeleton of the body, and a cargo box (not shown) mounted behind the cab 3. In addition, wheels 5 is provided at a lower portion of the frame via a suspension mechanism (not shown).

The cab 3 includes a front panel 3A on the front face and front pillars 3L,3R on the left and right sides of the front panel 3A, and a windshield 3B provided between the left and right front pillars 3L,3R. The front panel 3A, the front pillars 3L,3R and the windshield 3B collectively form the front face of the cab 3.

Inside the cab 3, an interior space (vehicle interior, cab room) including a driver's seat 6R and a navigator's seat 6L are provided. The inside of the cab 3 is a space surrounded by the panels (including the front panel 3A, the front pillars 3L,3R, and the windshield 3B described above) that form the exterior of the cab 3.

In FIGs. 1-3, the driver's seat 6R is arranged on the right side of the vehicle and the navigator's seat 6L is arranged on the left side of the vehicle. In addition, on the both left and right sides of the cab 3, doors 7 are provided which close openings 7A (see FIGs. 1 and 3) serving as the entrance/exit of the cab 3.

On the left and right front corner portions 3C of the cab 3 of the truck 1, on-board cameras (hereinafter simply referred to as "cameras") 9L,9R are provided at the tip ends of camera stays 8L,8R protruding outward of the truck 1. The cameras 9L,9R are electronic photographing devices capable of photographing the inside or the outside of the truck 1, and are configured to photograph respective predetermined photographing areas inside or outside the truck 1.

Specifically, the photographing area of the camera 9R at the side of the driver's seat 6R (right side) is set to an area including the outer right front side and the outer right rear side of the truck 1 and a driver (passenger) seated on the driver's seat 6R inside the cab 3. The photographing area of the camera 9L at the side of the navigator's seat 6L (left side) is set to an area including the outer left front side and the outer left rear side of the truck 1, a driver seated on the driver's seat 6R inside the cab 3, and a lower front portion of the cab 3.

Throughout the specification, the phrase "capable of photographing the inside or the outside of the truck 1" means that at least one of the inside and the outside of the truck 1 can be photographed.

In the present embodiment, 360-degree cameras are provided as the cameras 9L,9R. To the cameras 9L,9R, which are 360-degree cameras, spherical cameras that have photographing ranges of all 360 degrees are applied. If there is no need to discriminate the left and right cameras 9L, 9R from each other in the following description, each of the left and right cameras 9L, 9R is referred to as "camera 9".

As shown in FIGs. 7 and 8, for example, the camera 9, which is a 360-degree camera, has a configuration that enables 360-degree photographing by mounting two lenses 9F each on one of the sides (e.g., the front and rear sides of the vehicle) of a casing 9A, capturing a subject with each lens 9F on one side (180 degrees+d, indicated by the angles α1 and α2 in FIG. 8), and synthesizing the two images. Although not shown in FIGs. 1-3, each camera 9 includes a photographing device that photographs a subject that each lens 9F captures and converts the photographed subject into image data in an analog-electric signal, and an image-processing circuit that digitizes the image data converted by the photographing device. The above-described configuration of the camera 9 is exemplary, and is not limited thereto.

As shown in FIGs. 1-3, the enter/exit-assist grip device 10 is provided inside the cab 3 (vehicle inside).

The enter/exit-assist grip device 10 is an assisting tool for assisting an entering/exiting operation of a passenger to enter and exit through the opening 7A of the cab 3. The truck 1, which is a cab-over vehicle as described above, is provided with the engine room under the driver's seat 6R and the navigator's seat 6L, which accordingly have large height from the ground level. For the above, the enter/exit-assist grip devices 10 are provided to assist the passengers to make vertical movement when entering and exiting from the driver's seat 6R or the navigator's seat 6L (i.e., the inside of the cab 3).

The enter/exit-assist grip devices 10 are provided one for each of the driver's seat 6R and the navigator's seat 6L. Specifically, as shown in FIGs. 2 and 3, the enter/exit-assist grip device 10R by the driver's seat 6R is attached to the front right side as viewed from the driver's seat 6R, which corresponds to the right front pillar 3R provided on the right side of the windshield 3B. The enter/exit-assist grip device 10L by the navigator's seat 6L is attached to the left side as viewed from the navigator's seat 6L, which corresponds to the left front pillar 3L provided on the left side of the windshield 3B.

FIG. 4 is an enlarged view of the right enter/exit-assist grip device 10R on the right, and FIG. 5 is a cross-sectional view of the enter/exit-assist grip device 10R cut along Line A-A of FIG. 4. Since the left and right enter/exit-assist grip devices 10L,10R have the same configuration except that they are symmetrical, the following description will focus on the right enter/exit-assist grip device 10R. If there is no need to discriminate the left and right enter/exit-assist grip devices 10L,10R from each other, each of the left and right enter/exit-assist grip devices 10L,10R is referred to as "enter/exit-assist grip device 10".

The enter/exit-assist grip device 10 includes a fixing unit 11, a grip unit 12, and a frame unit 13, which are integrally formed.

The fixing unit 11 is a part for attaching the enter/exit-assist grip device 10 to the front pillar 3R (or 3L). The grip unit 12 is a part (a grip main body) that is gripped by a passenger getting in and out (entering and exiting from) the cab 3. The frame unit 13 is a part that holds a monitor device 14 for displaying an image photographed by the camera 9.

The fixing unit 11 serves as a base for integrally holding the grip unit 12 and the frame unit 13 and for attaching the enter/exit-assist grip device 10 to the front pillar 3L or 3R (the vehicle body side). As shown in FIGs. 1-3, the front pillar 3L,3R to which the fixing unit 11 is attached is arranged adjacent to the front side of the opening 7A, also arranged inside the cab 3 and extends along the vehicle height direction.

The fixing unit 11 has a shape along an attaching face 3D to which the fixing unit 11 is to be attached (see FIG. 5) on the front pillar 3L,3R, and is fixed to the front pillar 3L,3R at the two points (multiple points) spaced apart from each other along the vehicle height direction with bolts.

Each of the grip unit 12 and the frame unit 13 extends from the fixing unit 11.

As shown in FIG. 5, the grip unit 12 extends from the fixing unit 11 rearward (toward the rear side) of the vehicle where the opening 7A is positioned. On the other hand, the frame unit 13 extends from the fixing unit 11 inward of the vehicle (toward the inner side of the cab 3).

More specifically, in regard to the right enter/exit-assist grip device 10R shown in FIGs. 4 and 5, the fixing unit 11 is fixed to the front pillar 3R arranged at the front right side in the cab 3. The grip unit 12 extends rearward from the fixing unit 11. As shown in FIG. 5, the grip unit 12 is arranged along a face of the right door (opening 7A) which face faces inward of the vehicle.

The frame unit 13 extends from the fixing unit 11 inward of the vehicle, i.e., leftward. It also can be said that the frame unit 13 extends away from the grip unit 12 arranged along the door 7.

As shown in FIG. 4, the grip unit 12 is provided with two base end portions 12A extending rearward from the fixing unit 11 and being spaced apart from each other in the vehicle height direction. At the rear end side of the respective base end portions 12A on the opposite side to the fixing unit 11, a grip portion 12B extending along the vehicle height direction is provided.

The grip portion 12B is a handrail portion that is to be held by a passenger and is provided rearward of the fixing unit 11 so as to be spaced apart from the fixing unit 11, being interposed by the base end portions 12A. The grip unit 12 forms a hollow space between the grip portion 12B and the fixing unit 11. The passenger holds the grip unit 12 by inserting his/her fingers into this hollow space and grasping the grip portion 12B with his/her palm.

The frame unit 13 is provided with a pair of vertical frames 13A that are arranged inward of the vehicle on an opposite side of the grip unit 12 with respect to the fixing unit 11, that extend along the vehicle height direction, and that are spaced apart from each other with respect to the vehicle width direction (left-right direction). Furthermore, the frame unit 13 is provided with a pair of horizontal frames 13B that extend from the fixing unit 11 inward of the vehicle and extend along the vehicle width direction and that are spaced apart from each other with respect to the vehicle height direction (up-down direction). A substantially-rectangular planar region 13C surrounded by the pair of vertical frames 13A and the pair of horizontal frames 13B serves as a holding portion for the monitor device 14. The frame unit 13 holds the monitor device 14 in the planar region 13C.

The monitor device 14 is an electronic display device having an image displaying region 14A, being in the form of a substantial rectangular, for displaying image information photographed by the camera 9 to a passenger of the truck 1. An example of the monitor device 14 is a publicly-known display device such as an LCD or an organic EL display. The monitor device 14 has a thin rectangular appearance conforming to the planar region 13C of the frame unit 13, and is held in the frame unit 13 by the four sides of the frame unit 13, i.e., the pair of vertical frames 13A and the pair of horizontal frames 13B, that support the four sides of the monitor device 14.

Next, referring to FIGs. 4 and 5, a detailed configuration of the enter/exit-assist grip device 10 will now be described.

As shown in FIG. 5, the grip unit 12 and the frame unit 13 are arranged in a dogleg shape bent at the fixing unit 11 in a top view.

As shown in FIG. 5, the fixing unit 11 of the present embodiment takes a shape extending in the front-rear direction along the attaching face 3D of the front pillar 3L,3R in the top view and the grip unit 12 extends rearward from the rear end of the fixing unit 11.

The frame unit 13 extends leftward (inward of the vehicle) with respect to the fixing unit 11 and the grip unit 12 arranged along the front-rear direction and also extends in a posture inclined forward.

In addition, a portion between the fixing unit 11 and the frame unit 13 is curved into a curved face shape protruding rearward in the top view. Forming the portion between the fixing unit 11 and the frame unit 13 into a curved face shape makes it possible to reduce the thickness between the fixing unit 11 and the frame unit 13. This contributes to the weight reduction of the enter/exit-assist grip device 10.

As shown in FIG. 4, the frame unit 13 of the right enter/exit-assist grip device 10 is arranged at a position at least partly overlapping the right front pillar 3R as viewed from a driver seated on the driver's seat 6R. The frame unit 13 of the left enter/exit-assist grip device 10 is arranged at a position at least partly overlapping the left front pillar 3L as viewed from a driver seated on the driver's seat 6R.

In order to secure the visibility of the monitor device 14 from the driver's seat 6R, the posture of the frame unit 13 is set such that the image displaying region 14A of the monitor device 14 is directed to the driver seated on the driver's seat 6R.

The grip unit 12 is provided within a beam angle 14B (indicated by two-dot chain lines in FIG. 5) of the monitor device 14 held in the frame unit 13 of which posture is set as described above.

In the grip portion 12B of the grip unit 12, a face arranged opposite to the frame unit 13 (monitor device 14) serves as a chamfered portion 12C that is chamfered flat.

Specifically, as shown in FIG. 5, the grip portion 12B of the grip unit 12 is formed to have a rectangular cross-sectional shape having angles R at the cross section cut along the front-rear direction and the vehicle width direction. This structure can secure the chamfered portion 12C at the grip unit 12 and also can form the grip portion 12B into a shape easily grasped.

The monitor device 14 is connected to a control device 15 (see FIG. 2, controller) provided to the truck 1 so as to be capable of data communication.

The control device 15 is an electronic control unit for overall controlling the operation of the monitor device 14, and is configured as, for example, an LSI device or an embedded electronic device in which a microprocessor or a ROM, and a RAM are integrated, for example.

Into the input side of the control device 15, image information from the cameras 9, unlocking signal indicative of unlocking of the door 7, and the like are input. To the output side of the control device 15, the monitor device 14 is connected.

The control device 15 executes a light-emitting mode in which the monitor device 14 is caused to emit light when a passenger enters the truck 1, in addition to normal control in which images photographed by the cameras 9 are displayed on the monitor device 14.

Next, description will now be made in relation to a light-emitting mode executed by the monitor device 14.

The light-emitting mode is an operation mode in which, when a passenger is to enter the truck 1, the monitor device 14 is caused to emit light so that the grip unit 12 is irradiated with the emitted light. The present embodiment assumes an example in which the light-emitting mode is executed when a passenger enters (gets in) the truck 1.

In order to execute this light-emitting mode, the control device 15 obtains, from the outside, entering information indicating that the passenger is entering the truck 1. The entering information is a signal that triggers the start of a light-emitting mode by the control device 15. An example of the entering information is an unlocking signal that instructs unlocking of the door 7 from the outside the vehicle. A technique that transmits an unlocking signal from the outside of the vehicle 1 using, for example, a smart key has been publicly-known in the art. Since the timing at which the passenger transmits the unlocking signal from the outside of the vehicle is just before the passenger enters the truck 1, the light-emitting mode can be started at the timing of the entering.

In the light-emitting mode, the control device 15 causes the monitor device 14 to emit light in a predetermined manner, not executing the normal control in which images photographed by the cameras 9 are displayed on the monitor device 14.

As one example, in the light-emitting mode, the control device 15 causes only an edge region 14C that is positioned by the side of the grip unit 12 in the image displaying region 14A of the monitor device 14 to emit light in the predetermined manner.

Specifically, the control device 15 displays (emits) a light-emitting pattern of a predetermined pattern on the edge region 14C. The light-emitting pattern of the predetermined pattern is set so as to enhance the distinguishability of the grip unit 12 by the light with which the grip unit 12 is irradiated. The light-emitting pattern is, as shown in FIG. 4, a horizontal stripe pattern (zebra pattern) extending along the width direction of the image displaying region 14A, for example. The light emission in the zebra pattern is an example of a light-emitting pattern that makes it easier to distinguish the shape of a three-dimensional object when the object is irradiated with the emitted light.

The control device 15 can control the display on the zebra pattern to scroll the zebra pattern vertically (i.e., motion light-emitting pattern). The zebra pattern may be a multi-color stripe pattern of two or more colors. By causing the edge region 14C to emit light in a zebra pattern, the grip unit 12 can be irradiated with the light in the zebra pattern.

In the light-emitting mode, the control device 15 may display a predetermined image or may display nothing on a region of the image displaying region 14A except form the edge region 14C. The predetermined image may be an appropriate image or video, such as a brand logo image, set in advance as an activation screen of the monitor device 14.

### 2. Control

FIG. 5 is a flow chart for explaining a procedure of the light-emitting mode executed by the control device 15.

When the driver (passenger) transmits an unlocking signal instructing unlocking of the door 7 from the outside of the vehicle using a smart key before entering the truck 1, the control device 15 obtains an unlocking signal (entering information) (Step S1).

In response to the obtained unlocking signal, the control device 15 determines that the driver carries out the entering operation, activates the monitor device 14 (Step S2), and then starts the light-emitting mode (Step S3).

Specifically, after the monitor device 14 is activated, a zebra pattern is displayed on the edge region 14C of the image displaying region 14A, and controls the display on the zebra pattern to scroll the zebra pattern vertically as the time elapses. At this time, the control device 15 may display an appropriate image, such as a brand logo image, set as an activation screen in a region except for the edge region 14C in the image displaying region 14A.

When the driver finishes entering the truck 1 presses the start switch of the truck 1, the control device 15 obtains an on-operation signal of the start switch (Step S4). In response to the on-operation signal, the control device 15 determines that the entering operation has been completed, and ends the light-emitting mode (Step S5).

Specifically, the control device 15 ends the display of the zebra pattern in the edge region 14C, and then starts the normal control in which images photographed by the cameras 9 are displayed, using the entire region of the image displaying region 14A. More specifically, the control device 15 displays an image photographed by the camera 9L on the left side on the monitor device 14 held in enter/exit-assist grip device 10L on the left side, and displays an image photographed by the camera 9R on the right side on the monitor device 14 held in enter/exit-assist grip device 10R on the right side.

In exiting the truck, when the driver depresses the start switch of the truck 1 and the off-operation signal is outputted, the control device 15 ends the normal control without executing the light-emitting mode, and ends the operation of the monitor device 14 (turn off the monitor device 14).

Alternatively, the light-emitting mode may be executed when the passenger is to exit the truck. In this alternative, the control device 15 ends the normal control of the monitor device 14 in response to the off-operation signal of the start switch, and then starts the light-emitting mode. After exiting (getting off) from the truck 1, when the driver transmits a locking signal that instructs locking of the door 7 from the outside of the vehicle using the smart key, the control device 15 ends the light-emitting mode in response to the locking signal and ends the operation of monitor device 14 (turn off the monitor device 14).

### 3. Action and Effect

The enter/exit-assist grip device 10 with the monitor device according to the present embodiment described above brings the following actions and effects.

In the enter/exit-assist grip device 10 according to this application example, the grip unit 12 and the frame unit 13 that holds the monitor device 14 are both integrally extended from the fixing unit 11 fixed to the front pillar 3L,3R. With this configuration, the grip unit 12 and the monitor device 14 can be collectively and efficiently arranged around the front pillar 3L,3R. Therefore, it is possible to optimize the arrangement of the grip unit 12 that assists an entering/exiting operation of a passenger and the monitor device 14. As a consequence, a narrow interior space inside the cab 3 can be effectively utilized.

In addition, the control device 15 executes, based on entering information indicating that the passenger is entering the truck 1, the light-emitting mode that causes the monitor device 14 to emit light in a predetermined manner, so that the grip unit 12 is irradiated with the light that the monitor device 14 emits. Therefore, the recognizability of the grip unit 12 is enhanced in a situation where visibility is poor, for example, at night or in a dark place. This can appropriately support the entering/exiting operation of a passenger in entering or exiting the truck 1.

Further, by arranging the grip unit 12 within the beam angle 14B of the monitor device 14, the grip unit 12 can be reliably irradiated when the monitor device 14 is caused to emit light in the light-emitting mode. Therefore, the recognizability of the grip unit 12 is further enhanced.

Furthermore, the grip unit 12 forms the face arranged opposite to the frame unit 13 to be the chamfered portion 12C chamfered flat and allows to irradiate the chamfered portion 12C of the grip unit 12 with emitted light when the monitor device 14 is caused to emit light in the light-emitting mode. This widens a face likely to be irradiated with light and further enhances the recognizability of the grip unit 12.

In addition, since the control device 15 causes the edge region 14C that is positioned by the side of the grip unit 12 in the image displaying region 14A of the monitor device 14 to emit light in the emission mode, the recognizability of the grip unit 12 can be further enhanced in comparison with an environment having poor brightness.

Further, by the control device 15 displaying the motion light-emitting pattern having a predetermined pattern in the light-emitting mode, the three-dimensional shape of the grip unit 12 can be easily recognized. Therefore, the recognizability of the grip unit 12 is further enhanced.

If the entering information is an unlocking signal that instructs to unlock the door 7 that closes the opening 7A, the light-emitting pattern is executed in response to the unlocking instruction of the door 7. Therefore, the light-emitting mode can be started at an appropriate timing just before the driver gets into (enters) the truck 1.

Further, by arranging the frame unit 13 at a position at least partly overlaps the front pillar 3L,3R as viewed from the driver's seat 6R in the truck 1, the field of view is less likely to be disturbed by the windshield 3B and the door glass. In addition, since the monitor device 14 can be checked in the same way as when looking at door mirror, the driver can easily check the monitor devices 14 while driving the truck 1.

### 4. Miscellaneous

The configuration of the enter/exit-assist grip device 10 is not limited to one described above.

For example, the enter/exit-assist grip device 10 does not have to include the control device 15 that performs the light-emitting mode. The light-emitting mode may be executed in the left and right enter/exit-assist grip devices 10L and 10R, or may be executed in only one of the enter/exit-assist grip devices 10L and 10R (e.g., the right enter/exit-assist grip device 10R by the side of the driver's seat 6R).

The left and right enter/exit-assist grip device 10L,10R may be asymmetric. The grip unit 12 does not have to include the chamfered portion 12C that is chamfered flat, and may alternatively have, for example, a circular cross-sectional shape. In the light-emitting mode, the entire image displaying region 14A of the monitor device 14 may emit light. In this alternative, a motion zebra pattern (a light-emitting pattern formed of a predetermined pattern) may be displayed over the entire image displaying region 14A.

A vehicle adopting the enter/exit-assist grip device 10 is not limited to the truck 1 and may alternatively be a minivan, for example. In a vehicle, such as a truck and a minivan, that is not provided with a hood in front of the cab and accordingly arranges the engine room under the front seat, the height of the front seat from the ground level is high. For the above, the enter/exit-assist grip device 10 has a great significance of supporting the entering/exiting operation of a passenger.

Appendices of the present invention will now be disclosed below.

### [Appendix 1]

An enter/exit-assist grip device that assists an entering/exiting operation of a passenger of a vehicle when the passenger enters and exits the vehicle through an opening for entering and exiting the vehicle, the vehicle including an electronic photographing device capable of photographing an inside or an outside of the vehicle and a monitor device having an image displaying region that displays image information photographed by the electronic photographing device to the passenger, the enter/exit-assist grip device including:
a fixing unit that is fixed to a front pillar, the front pillar being arranged adjacent to a front side of the opening in the vehicle and extending in a vehicle height direction;
a grip unit that extends from the fixing unit to a rear side where the opening is positioned, the passenger gripping the grip unit for the entering/exiting operation; and
a frame unit that holds the monitor device in a planar region surrounded by vertical frames and horizontal frames, the vertical frames being arranged inward of the vehicle on an opposite side of the grip unit with respect to the fixing unit and extending along the vehicle height direction, the horizontal frames extending from the fixing unit inward of the vehicle along a vehicle width direction.

### [Appendix 2]

The enter/exit-assist grip device according to appendix 1, further including
a controller that executes, based on entering information indicating that the passenger enters the vehicle, a light-emitting mode that causes the monitor device to emit light in a predetermined manner.

### [Appendix 3]

The enter/exit-assist grip device according to appendix 1 or 2, wherein
the grip unit is arranged within a range of a beam angle of the monitor device being held by the frame unit.

### [Appendix 4]

The enter/exit-assist grip device according to any one of appendices 1-3, wherein
the grip unit includes a face arranged opposite to the frame unit, the face serving as a chamfered portion being chamfered flat.

### [Appendix 5]

The enter/exit-assist grip device according to any one of appendices 2-4, wherein
the controller causes a part of the image displaying region of the monitor device to emit light in the light emitting mode, the part being positioned at a side of the grip unit.

### [Appendix 6]

The enter/exit-assist grip device according to any one of appendices 2-5, wherein
the controller emits a motion light-emitting pattern having a predetermined pattern in the light-emitting mode.

### [Appendix 7]

The enter/exit-assist grip device according to any one of appendices 2-6, wherein
the entering information is an unlocking signal that instructs to unlock a door that closes the opening.

### [Appendix 8]

The enter/exit-assist grip device according to any one of appendices 1-7, wherein
the frame unit is arranged at a position at least partly overlaps the front pillar as viewed from a driver's seat in the vehicle.

### [Reference Signs List]

1 Truck (Vehicle)
3 Cab
3A Front panel
3B Windshield
3C Front corner portion
3D Attaching face
3L Front pillar
3R Front pillar
5 Wheel
6L Navigator's seat
6R Driver's seat
7 Door
7A Opening
8L Camera stay
8R Camera stay
9,9L,9R Camera (electronic photographing device)
9A Casing
9F Lens
10,10L,10R Enter/exit-assist grip device
11 Fixing unit
12 Grip unit
12A Base end portion
12B Grip portion
12C Chamfered portion
13 Frame unit
13A Vertical frame
13B Horizontal frame
13C Planar region
14 Monitor device
14A Image displaying region
14B Beam angle
14C Edge region
15 Control device (controller)

## Claims

1. An enter/exit-assist grip device that assists an entering/exiting operation of a passenger of a vehicle when the passenger enters and exits the vehicle through an opening for entering and exiting the vehicle, the vehicle comprising an electronic photographing device capable of photographing an inside or an outside of the vehicle and a monitor device having an image displaying region that displays image information photographed by the electronic photographing device to the passenger, the enter/exit-assist grip device comprising:
a fixing unit that is fixed to a front pillar, the front pillar being arranged adjacent to a front side of the opening in the vehicle and extending in a vehicle height direction;
a grip unit that extends from the fixing unit to a rear side where the opening is positioned, the passenger gripping the grip unit for the entering/exiting operation; and
a frame unit that holds the monitor device in a planar region surrounded by vertical frames and horizontal frames, the vertical frames being arranged inward of the vehicle on an opposite side of the grip unit with respect to the fixing unit and extending along the vehicle height direction, the horizontal frames extending from the fixing unit inward of the vehicle along a vehicle width direction.

2. The enter/exit-assist grip device according to claim 1, further comprising
a controller that executes, based on entering information indicating that the passenger enters the vehicle, a light-emitting mode that causes the monitor device to emit light in a predetermined manner.

3. The enter/exit-assist grip device according to claim 2, wherein
the grip unit is arranged within a range of a beam angle of the monitor device being held by the frame unit.

4. The enter/exit-assist grip device according to claim 2, wherein
the grip unit comprises a face arranged opposite to the frame unit, the face serving as a chamfered portion being chamfered flat.

5. The enter/exit-assist grip device according to claim 2, wherein
the controller causes a part of the image displaying region of the monitor device to emit light in the light emitting mode, the part being positioned at a side of the grip unit.

6. The enter/exit-assist grip device according to claim 5, wherein
the controller emits a motion light-emitting pattern having a predetermined pattern in the light-emitting mode.

7. The enter/exit-assist grip device according to claim 2, wherein
the entering information is an unlocking signal that instructs to unlock a door that closes the opening.

8. The enter/exit-assist grip device according to claim 1, wherein
the frame unit is arranged at a position at least partly overlaps the front pillar as viewed from a driver's seat in the vehicle.
